# FASCICULE DE BREVET EUROPEEN

(11) **EP 1 325 157 B1**
(45) Date de publication et mention de la délivrance du brevet: **07.04.2004**
(21) Numéro de dépôt: 01960710.0
(22) Date de dépôt: 27.08.2001
(51) Int. Cl.: C21B 7/20

(54) **DISPOSITIF DE REPARTITION DE MATIERES EN VRAC AVEC GOULOTTE ROTATIVE A ANGLE D'INCLINAISON VARIABLE**
DREHBARE VERTEILERSCHURRE FÜR SCHÜTTGUT MIT EINSTELLBAREM NEIGUNGSWINKEL
VARIABLE DEVICE FOR BULK MATERIAL DISTRIBUTION WITH ROTARY CHUTE HAVING VARIABLE ANGLE OF INCLINATION

(30) Priorité: 20.09.2000 LU 90642
(43) Date de publication de la demande: 09.07.2003
(73) Titulaire: PAUL WURTH S.A., 1122 Luxembourg (LU)
(72) Inventeur: LONARDI, Emile, L-4945 Bascharage (LU); THILLEN, Guy, L-9234 Diekirch (LU); BREDEN, Emile, L-1472 Luxembourg (LU); CIMENTI, Giovanni, L-8062 Bertrange (LU)
(74) Mandataire: Schmitt, Armand
(86) Numéro de dépôt international: PCT/EP2001/009830
(87) Numéro de publication internationale: WO 2002/024962

(56) Documents cités:
- EP-A- 1 001 039
- US-A- 4 525 120
- DATABASE WPI Section Ch, Week 198323 Derwent Publications Ltd., London, GB; Class M24, AN 1983-55692K XP002169104 & SU 945 176 A (DNEPR METAL WKS), 25 juillet 1982 (1982-07-25)
- DATABASE WPI Section Ch, Week 198201 Derwent Publications Ltd., London, GB; Class M24, AN 1982-01532E XP002169105 & SU 817 058 A (URALMASH HEAVY MACH), 30 mars 1981 (1981-03-30)
- DATABASE WPI Section Ch, Week 198343 Derwent Publications Ltd., London, GB; Class M24, AN 1983-800189 XP002169106 & SU 985 047 A (METALLURG EQUIP CONSTR), 30 décembre 1982 (1982-12-30)
- PATENT ABSTRACTS OF JAPAN vol. 003, no. 063 (C-047), 30 mai 1979 (1979-05-30) & JP 54 038204 A (ISHIKAWAJIMA HARIMA HEAVY IND CO LTD), 22 mars 1979 (1979-03-22)
- DATABASE WPI Section Ch, Week 198343 Derwent Publications Ltd., London, GB; Class M24, AN 1983-800187 XP002169107 & SU 985 045 A (METALLURG EQUIP CONSTR), 30 décembre 1982 (1982-12-30)
- DATABASE WPI Section Ch, Week 198204 Derwent Publications Ltd., London, GB; Class M24, AN 1982-07550E XP002169108 & SU 821 493 A (URALMASH HEAVY ENG), 17 avril 1981 (1981-04-17)

## Description

### Domaine technique auquel se rapporte l'invention

La présente invention concerne un dispositif de répartition de matières en vrac avec goulotte rotative à angle d'inclinaison variable.

Elle concerne plus particulièrement un tel dispositif comprenant une carcasse de support, une goulotte de distribution pour les matières en vrac, un rotor de suspension et un rotor de commande du basculement, ainsi qu'un mécanisme de basculement. La goulotte est suspendue au rotor de suspension de façon à pouvoir basculer autour d'un axe de basculement sensiblement horizontal. Le mécanisme de basculement est connecté entre la goulotte et le rotor de commande du basculement de façon à transformer une rotation différentielle du rotor de suspension et du rotor de commande du basculement en une variation de l'angle d'inclinaison de la goulotte entre deux positions limites.

### Etat de la technique antérieure

Un dispositif de ce type est par exemple connu du brevet US 3,693,812. Dans ce dispositif, les deux rotors sont entraînés en rotation par l'intermédiaire d'une boîte à engrenages planétaires. De cette boîte à engrenages planétaires sont sortis : (1) un arbre d'entrée principal ; (2) un arbre d'entrée secondaire ; (3) un premier arbre de sortie, appelé ci-après arbre de rotation ; et (4) un deuxième arbre de sortie, appelé ci-après arbre de commande du basculement. L'arbre d'entrée principal est entraîné en rotation par un moteur d'entraînement. Un mécanisme démultiplicateur connecte l'arbre d'entrée principal à l'arbre de rotation. Ce dernier pénètre dans la carcasse de support où il s'engrène à l'aide d'un pignon dans un anneau denté du rotor de suspension. L'arbre de commande du basculement pénètre lui aussi dans la carcasse de support, où il s'engrène à l'aide d'un pignon dans un anneau denté du rotor de commande du basculement. La boîte à engrenages planétaires comprend en outre : une roue dentée annulaire horizontale, qui s'engrène à son périmètre extérieur avec un pignon de l'arbre de rotation ; une roue solaire, qui est portée par l'arbre d'entrée secondaire ; au moins deux pignons satellites, qui s'engrènent avec le périmètre intérieur de la roue dentée annulaire et la roue solaire ; et un porte-pignons satellites, qui s'engrène avec une roue dentée de l'arbre de commande du basculement. Ces engrenages sont dimensionnés de façon à ce que les deux arbres de sortie aient la même vitesse de rotation lorsque l'arbre d'entrée secondaire ne tourne pas. Un moteur de commande à sens de rotation réversible est connecté à l'arbre d'entrée secondaire de l'engrenage planétaire. En entraînant ce moteur de commande dans un premier sens, on fait basculer la goulotte dans un premier sens, et en l'entraînant dans le sens inverse, on fait basculer la goulotte dans le sens inverse. La vitesse de rotation du moteur de commande détermine la vitesse de basculement de la goulotte, indépendamment de la vitesse de rotation de la goulotte. En bloquant l'arbre d'entrée secondaire à l'aide d'un frein, on assure un angle d'inclinaison strictement constant pour la goulotte en rotation.

On notera que cette boîte à engrenages planétaires est un équipement clé du dispositif de répartition de matières en vrac. Il s'agit d'une construction spéciale qui représente une part importante du coût du dispositif. De plus, pour rester opérationnel lorsque l'unité d'entraînement nécessite une révision ou une réparation majeure, il est nécessaire d'avoir en réserve une boîte à engrenages planétaires complète.

### Objet de l'invention

L'objet de la présente invention est de proposer un dispositif de répartition de matières en vrac du genre décrit ci-dessus, avec un mécanisme d'entraînement plus simple, causant notamment moins de problèmes en cas de révisions ou réparations majeures.

### Exposé de l'invention

Conformément à l'invention, cet objectif est atteint par un dispositif de répartition de matières en vrac comprenant, de façon connue en soi, une carcasse de support, une goulotte de distribution pour les matières en vrac, un rotor de suspension et un rotor de commande du basculement, ainsi qu'un mécanisme de basculement. Les deux rotors sont montés dans la carcasse de support de façon à pouvoir tourner autour d'un axe de rotation sensiblement vertical. La goulotte est suspendue au rotor de suspension de façon à pouvoir basculer autour d'un axe de basculement sensiblement horizontal. Un premier moteur permet d'entraîner le rotor de suspension, et dès lors la goulotte, dans un premier sens autour de son axe de rotation. Le mécanisme de basculement est connecté entre la goulotte et le rotor de commande du basculement de façon à transformer une rotation différentielle du rotor de suspension et du rotor de commande du basculement en une variation de l'angle d'inclinaison de la goulotte entre deux positions limites. Selon un premier aspect de la présente invention, la goulotte est équilibrée de façon à revenir dans une première de ses deux positions limites, tout en accélérant le rotor de commande du basculement via le mécanisme de basculement dans le sens de rotation du rotor de suspension. Un premier dispositif de freinage est alors associé au rotor de commande du basculement de façon à pouvoir exercer un moment de freinage sur le rotor de commande du basculement. A ce premier dispositif de freinage est associé un premier dispositif de contrôle, qui permet de contrôler le basculement de la goulotte en contrôlant le moment de freinage appliqué au rotor de commande du basculement, lorsque le rotor de suspension est entraîné dans le premier sens de rotation. Si le moment de freinage exercé sur le rotor de commande du basculement est égal au moment nécessaire pour maintenir la goulotte en position d'équilibre, la goulotte reste immobile en basculement. Si le moment de freinage exercé sur le rotor de commande du basculement est supérieur au moment nécessaire pour maintenir la goulotte en position d'équilibre, la goulotte s'éloigne de sa première position d'inclinaison limite. Si le moment de freinage exercé sur le rotor de commande du basculement est inférieur au moment nécessaire pour maintenir la goulotte en position d'équilibre, la goulotte se rapproche de sa première position d'inclinaison limite, grâce à son équilibrage particulier qui provoque une accélération du rotor de commande du basculement par rapport au rotor de suspension. Dans les trois cas, le premier moteur qui doit bien entendu développer un moment d'entraînement qui soit supérieur au moment de freinage du rotor de commande du basculement tout en assurant une vitesse de rotation sensiblement constante. Reste à noter que pour assurer l'équilibrage de la goulotte qui assure son retour dans une première de ses deux positions limites, on peut soit faire intervenir exclusivement le poids de la goulotte soit avoirs recours à des contrepoids, respectivement des ressorts ou d'autres éléments aptes à stocker de l'énergie potentielle lorsque la goulotte est basculée dans un sens, et la restituer lorsque la goulotte doit être basculée dans le sens inverse. En conclusion, en associant au rotor de commande du basculement un simple dispositif de freinage à moment de freinage contrôlable, on arrive à contrôler l'angle d'inclinaison de la goulotte ainsi que sa vitesse de basculement, lorsque cette dernière est en rotation dans un premier sens.

Afin de permettre une rotation de la goulotte avec un angle d'inclinaison strictement constant sans devoir constamment freiner le rotor de commande du basculement, on peut connecter entre le rotor de suspension et le rotor de commande du basculement un mécanisme de transmission à embrayage. En position embrayée, ce mécanisme rend les deux rotors solidaires en rotation et assure aux deux rotors une vitesse de rotation identique, alors qu'en position débrayée de l'embrayage, il permet une accélération, respectivement une décélération d'un rotor par rapport à l'autre. En d'autres termes, après avoir réglé--le mécanisme de transmission étant débrayé--un angle d'inclinaison particulier de la goulotte par variation du moment de freinage du rotor de commande du basculement, on peut embrayer le mécanisme de transmission pour fixer mécaniquement le décalage angulaire des deux rotors et assurer ainsi un angle d'inclinaison strictement constant de la goulotte sans devoir dépenser de l'énergie à cet effet.

Si l'on ne veut pas être limité à un seul sens de rotation pour la goulotte, respectivement si l'on veut pouvoir ajuster l'angle d'inclinaison de la goulotte lorsque celle-ci est immobile en rotation, il faudra associer un second moteur au rotor de commande du basculement, de façon à pouvoir entraîner ce dernier autour de son axe de rotation dans un deuxième sens de rotation, ainsi qu'un second dispositif de freinage au rotor de suspension, de façon à pouvoir exercer un moment de freinage sur le rotor de suspension. Un dispositif de contrôle, qui est associé au second dispositif de freinage, permet alors de contrôler la variation de l'angle d'inclinaison de la goulotte en rotation dans le deuxième sens par variation du moment de freinage du rotor de suspension. Pour assurer un angle d'inclinaison strictement constant de la goulotte sans devoir dépenser de l'énergie à cet effet, on aura avantageusement recours au mécanisme de transmission à embrayage décrit plus haut. Reste à noter qu'on peut aussi varier l'inclinaison de la goulotte sans l'entraîner en rotation. A cette fin, on bloque le rotor de suspension en rotation par l'intermédiaire du second dispositif de freinage et on contrôle le basculement de la goulotte, dans un premier sens, par entraînement du rotor de commande du basculement par le second moteur et, dans un deuxième sens, par freinage du rotor de commande du basculement par l'intermédiaire du premier dispositif de freinage, en profitant du fait que l'équilibrage de la goulotte fait revenir celle-ci dans une première de ses deux positions limites.

Afin de garantir une vitesse de rotation de la goulotte sensiblement constante dans ledit deuxième sens de rotation, lorsque l'on varie l'angle d'inclinaison de la goulotte par freinage du rotor de suspension, il faudra associer un variateur de vitesse au second moteur. Un dispositif de contrôle associé au variateur de vitesse permet alors d'assurer la vitesse de rotation souhaitée du rotor de suspension, alors que le deuxième dispositif de contrôle, contrôlant le moment de freinage du rotor de suspension, permet d'assurer la vitesse de basculement souhaitée de la goulotte. Alternativement, on peut imposer la vitesse de rotation de la goulotte par l'intermédiaire du second dispositif de freinage, et associer au variateur de vitesse du second moteur un dispositif de contrôle qui permet alors de contrôler directement la vitesse de basculement de la goulotte. Reste à noter que dans les deux cas le second moteur avec son variateur de vitesse doit être apte à entraîner le rotor de commande du basculement à une vitesse de rotation supérieure et inférieure à la vitesse de rotation souhaitée pour la goulotte.

Dans ce qui est décrit ci-dessus, on a supposé que la goulotte est équilibrée de façon à revenir dans une première de ses deux positions limites, tout en accélérant le rotor de commande du basculement via le mécanisme de basculement dans le sens de rotation du rotor de suspension. Si un tel équilibrage n'était pas possible, il faudrait équiper le dispositif selon l'invention comme suit. Un premier dispositif de freinage est associé au rotor de commande du basculement de façon à pouvoir exercer un moment de freinage sur le rotor de commande du basculement. Un second moteur est associé au rotor de commande du basculement de façon à pouvoir entraîner ce dernier autour de son axe dans le premier sens à une vitesse de rotation supérieure à la vitesse de rotation souhaitée pour la goulotte. Un second dispositif de freinage est associé au rotor de suspension de façon à pouvoir exercer un moment de freinage sur le rotor de suspension. Un dispositif de contrôle permet alors de contrôler le basculement de la goulotte dans un premier sens, par entraînement du rotor de suspension dans le premier sens et par freinage contrôlé du rotor de commande du basculement à l'aide du premier dispositif de freinage, et dans un deuxième sens, par un entraînement du rotor de commande du basculement dans le premier sens, à une vitesse de rotation supérieure à la vitesse de rotation souhaitée pour la goulotte, et un freinage contrôlé du rotor de suspension à l'aide du second dispositif de freinage.

Si dans le dispositif du paragraphe précédent, le mécanisme de basculement est un mécanisme parfaitement autobloquant, c'est-à-dire qu'il ne faut pas appliquer de moment audit rotor de commande du basculement pour maintenir la goulotte immobile en basculement, alors il suffit d'entraîner le rotor de suspension en rotation et de ne pas freiner le rotor de commande du basculement pour permettre une rotation de la goulotte avec un angle d'inclinaison strictement constant. Si cependant le mécanisme de basculement n'est pas parfaitement autobloquant, respectivement si l'usure risque de détruire son caractère autobloquant, alors il est recommandé d'équiper le dispositif d'un mécanisme de transmission à embrayage tel que décrit plus haut.

Si l'on ne veut pas être limité à un seul sens de rotation pour la goulotte, il faudra que le premier moteur soit apte à entraîner le rotor de suspension dans un deuxième sens de rotation, à la vitesse de rotation souhaitée pour la goulotte, et que le second moteur soit apte à entraîner le rotor de commande du basculement dans le deuxième sens de rotation, à une vitesse de rotation supérieure à la vitesse de rotation souhaitée pour la goulotte. Dans ce cas, le dispositif de contrôle associé au premier dispositif de freinage, au second dispositif de freinage et au second moteur, doit être apte à contrôler le basculement de la goulotte : (a) dans un premier sens, par entraînement du rotor de commande du basculement à l'aide du second moteur dans le deuxième sens à une vitesse de rotation supérieure à la vitesse de rotation souhaitée pour la goulotte et un freinage contrôlé du rotor de suspension à l'aide du second dispositif de freinage ; et (b) dans un deuxième sens, par entraînement du rotor de suspension dans le deuxième sens et un freinage contrôlé du rotor de commande du basculement à l'aide du premier dispositif de freinage. Reste à noter que dans ce dispositif on peut aussi varier l'inclinaison de la goulotte sans l'entraîner en rotation. A cette fin on bloque le rotor de suspension en rotation par l'intermédiaire du second dispositif de freinage et on contrôle le basculement de la goulotte, dans un premier sens, par entraînement du rotor de commande du basculement par le second moteur dans un premier sens, dans un deuxième sens, par entraînement du rotor de commande du basculement par le second moteur dans un deuxième sens.

Afin de garantir avec le dispositif décrit dans le paragraphe précédent une vitesse de rotation de la goulotte sensiblement constante lorsque l'on varie l'angle d'inclinaison par freinage du rotor de suspension, il faudra associer un variateur de vitesse au second moteur. Un dispositif de contrôle associé au variateur de vitesse permet alors d'assurer la vitesse de rotation souhaitée du rotor de suspension, alors que le deuxième dispositif de contrôle, contrôlant le moment de freinage du rotor de suspension, permet d'assurer la vitesse de basculement souhaitée de la goulotte. Alternativement, on peut imposer la vitesse de rotation de la goulotte par l'intermédiaire du second dispositif de freinage, et associer au variateur de vitesse du second moteur un dispositif de contrôle qui permet alors de contrôler directement la vitesse de basculement de la goulotte. Reste à noter que le second moteur avec son variateur de vitesse doit être apte à entraîner le rotor de commande du basculement à une vitesse de rotation supérieure à la vitesse de rotation souhaitée pour la goulotte.

Il importe de noter que le dispositif de freinage utilisé dans un dispositif tel que décrit ci-dessus pour freiner le rotor de commande du basculement, respectivement le rotor de suspension, peut par exemple être un frein mécanique, hydraulique, magnétique ou électromagnétique. Dans une exécution préférée du dispositif selon l'invention, le premier moteur et le second dispositif de freinage, respectivement le second moteur et le premier dispositif de freinage, forment cependant une unité comprenant une machine électrique tournante alimentée par un circuit électrique de façon à pouvoir fonctionner en mode moteur, développant un couple d'entraînement, et en mode génératrice, développant un couple de freinage, et ceci dans au moins un sens de rotation. En d'autres termes, le premier, respectivement le second moteur d'entraînement, remplit également la fonction de frein électrique. Reste à noter que cette solution ne simplifie pas seulement la construction du dispositif (pas besoin de prévoir un frein séparé) mais qu'elle est également intéressante du point de vue bilan énergétique du dispositif. En effet, la machine électrique tournante qui fonctionne en mode génératrice transforme l'énergie de freinage en énergie électrique, qu'elle injecte dans le réseau d'alimentation électrique. Cette énergie électrique sert alors à compenser au moins partiellement l'énergie électrique que la machine électrique tournante qui fonctionne en mode moteur doit absorber pour vaincre le moment de freinage développé pour contrôler l'angle d'inclinaison de la goulotte.

Dans un mode d'exécution préféré d'un dispositif selon l'invention, la machine électrique tournante est par exemple un moteur électrique équipé d'un réducteur de vitesse, et le circuit électrique est un convertisseur statique de fréquence. Il s'agit ici d'équipements standards bon marché, dont le remplacement en cas de bris de machine ne constituera normalement pas de problèmes.

Reste à noter que les dispositifs de contrôle du basculement de la goulotte mentionnés ci-dessus peuvent comprendre différents moyens pour capter l'inclinaison de la goulotte. Dans une première exécution, on utilise un premier capteur angulaire captant la position angulaire du rotor de suspension, un deuxième capteur angulaire captant la position angulaire du rotor de commande du basculement et des moyens de calcul pour calculer la position angulaire relative des deux rotors et en déduire l'inclinaison de la goulotte. Une meilleure précision du dispositif de contrôle est cependant assurée lorsque l'on utilise un capteur angulaire différentiel captant directement la position angulaire relative des deux rotors. Cette précision peut encore être améliorée en connectant un mécanisme différentiel de mesure entre les deux rotors. Un tel mécanisme comprend un premier arbre d'entrée, un deuxième arbre d'entrée et un arbre de sortie. Le premier arbre d'entrée est entraîné en rotation par le rotor de suspension, et le second arbre d'entrée est entraîné en rotation par le rotor de commande du basculement. Ce mécanisme différentiel de mesure est dimensionné de façon à ce que l'arbre de sortie soit immobile en rotation lorsque les deux rotors ont la même vitesse de rotation et à ce qu'il reproduise l'angle d'inclinaison de la goulotte dans un repère immobile en rotation. Un simple capteur angulaire capte alors la position angulaire de l'arbre de sortie du mécanisme différentiel de mesure et détecte ainsi l'inclinaison de la goulotte dans un repère immobile en rotation. Le dispositif de contrôle du basculement peut également comprendre un capteur d'inclinaison de la goulotte en rotation avec la goulotte. Dans ce cas, on associe au capteur d'inclinaison mobile en rotation un émetteur et on monte au moins un récepteur dans la carcasse de support immobile en rotation. De cette façon, on sait mesurer l'inclinaison de la goulotte directement dans son repère en rotation.

### Brève description des Figures

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
- Fig.1:: une vue en plan d'un dispositif de répartition de matières en vrac avec goulotte rotative à angle d'inclinaison variable selon l'invention ;
- Fig.2:: une coupe longitudinale à travers le dispositif de la Fig. 1, la partie supérieure étant une coupe selon la ligne de coupe A-A de la Fig. 1 ; la partie inférieure étant une coupe selon la ligne de coupe B-B de la Fig. 1 ;
- Fig.3:: une vue en élévation d'un détail qui est identifié par la flèche 3 sur la Fig. 2 ;
- Fig.4:: une coupe longitudinale analogue à celle de la Fig. 2, à travers une première variante d'exécution d'un dispositif de répartition de matières en vrac avec goulotte rotative à angle d'inclinaison variable selon l'invention ;
- Fig.5:: une coupe longitudinale analogue à celle de la Fig. 2, à travers une deuxième variante d'exécution d'un dispositif de répartition de matières en vrac avec goulotte rotative à angle d'inclinaison variable selon l'invention ; et
- Fig.6:: une coupe transversale dont la ligne de coupe est identifiée par les flèches 6-6 dans la Fig. 5.

### Description détaillée de quelques modes de réalisation avantageux de l'invention

Sur les figures, les mêmes références désignent des éléments identiques ou similaires.

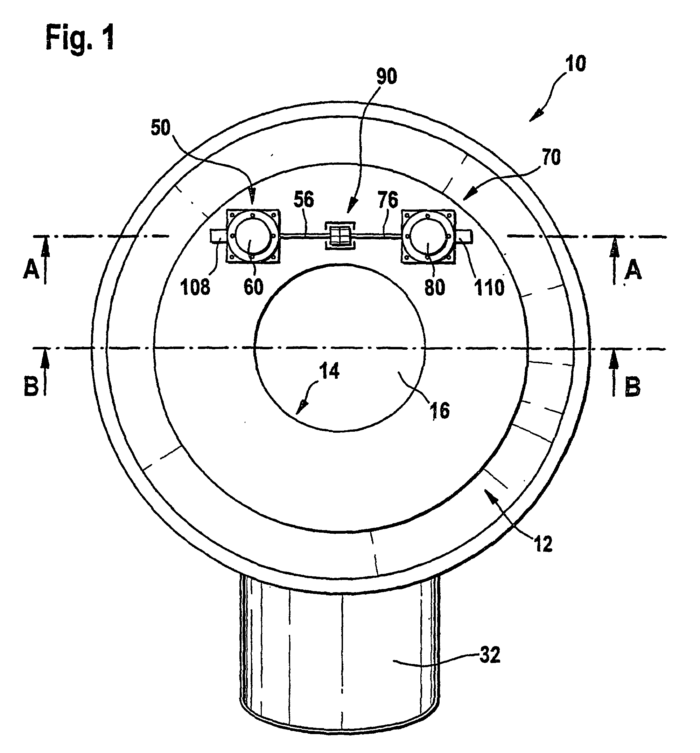

Le dispositif de répartition de matières en vrac 10 montré sur les Figures 1, 2, 4 et 5 est plus spécialement destiné à faire partie d'un dispositif d'alimentation d'un four à cuve, tel que par exemple un haut fourneau. Il comprend une carcasse extérieure 12, qui est munie d'un manchon fixe d'alimentation 14 définissant un canal vertical d'alimentation 16. Un rotor de suspension 18 est suspendu dans la carcasse extérieure 12 à l'aide d'un anneau de roulement de grand diamètre 20. Ce rotor de suspension 18 comprend un corps cylindrique muni à son extrémité inférieure d'un collet horizontal 24, qui fait écran entre l'intérieur de la carcasse 12 et l'intérieur du four. Un deuxième rotor 28, appelé rotor de commande du basculement 28, entoure le rotor de suspension 18 et est suspendu dans la carcasse extérieure 12 à l'aide d'un anneau de roulement de grand diamètre 26, de façon à avoir son axe de rotation sensiblement coaxial à l'axe de rotation du rotor de suspension 18.

La référence 32 repère une goulotte de distribution pour des matières en vrac déversées à travers le canal d'alimentation 16. Cette goulotte 32 comprend deux bras latéraux de suspension 34 et 34', à l'aide desquels elle est suspendue au rotor de suspension 18. Un mécanisme de basculement actionné par le rotor de commande du basculement 28 permet de basculer la goulotte 32 autour d'un axe de basculement sensiblement horizontal. Dans le dispositif représenté, ce mécanisme de basculement comprend, par bras de suspension 34, 34' de la goulotte 32, un mécanisme de suspension 36, 36' porté par le rotor de suspension 20. Chacun de ces deux mécanismes de suspension 36, 36' comprend un arbre d'entrée vertical 38, 38', un système d'engrenage interne (non montré) et un tourillon de suspension horizontal 40, 40'. Les deux bras latéraux de suspension 34, 34' de la goulotte 32 sont accouplés aux tourillons de suspension 40, 40', et ces derniers définissent un axe de basculement sensiblement horizontal pour la goulotte 32. L'arbre d'entrée vertical 38, 38' de chacun des deux mécanismes de suspension 36, 36' est équipé d'un pignon 42, 42' qui s'engrène avec une couronne dentée 43 du rotor de commande du basculement 28. Le système d'engrenage interne transforme une rotation de l'arbre d'entrée vertical 38, 38' en une rotation du tourillon de suspension 40, 40'. On notera que les deux mécanismes de suspension 36 et 36' devront être symétriques par rapport au plan médian de la goulotte 32, c'est-à-dire qu'une rotation dans le même sens des arbres d'entrée 38, 38' devra résulter en une rotation dans des sens opposés des deux tourillons de suspension 40, 40'.

Il importe de noter que l'on connaît également d'autres mécanismes de basculement connectés à la goulotte et actionnés par le rotor de commande du basculement. Ainsi, le document US-A-4,941,792 propose par exemple d'utiliser comme mécanisme de basculement un levier de basculement bifurqué connecté entre les deux tourillons et le rotor de commande du basculement, respectivement un segment annulaire denté qui coopère avec un secteur denté solidaire d'un des deux tourillons de la goulotte. Le document US-A-5,002,806 propose de connecter le rotor à l'aide d'une tringle à articulations sphériques à une manivelle connectée à l'un des tourillons de la goulotte. D'autres mécanismes de basculement sont encore connus des documents WO 95/21272, US-A-4,368,813, US-A-3,814,403 et US-A-3,766,868.

La référence 50 repère un premier carter monté sur la carcasse de support 12. Ce carter 50 renferme un arbre vertical 54, appelé ci-après arbre de rotation 54, qui est connecté par un mécanisme de transmission angulaire à engrenages 52 à un arbre de sortie horizontal 56. L'extrémité supérieure de l'arbre de rotation 54 est accouplée, via un réducteur mécanique 58, à un moteur électrique 60. L'extrémité inférieure de l'arbre de rotation 54 est sortie de façon étanche à travers la plaque de base du carter 50 et est munie d'un pignon 62 qui s'engrène avec une couronne dentée 64 du rotor suspension 18. Reste à noter que la carcasse de support 12 est munie d'une ouverture 66 pour le passage du pignon 62, qui est fermée de façon étanche par la plaque de base du carter 50. La référence 70 repère un deuxième carter monté sur la carcasse de support 12. Ce carter 70 renferme un arbre vertical 74, appelé ci-après arbre de commande du basculement 74, qui est connecté par un mécanisme de transmission angulaire à engrenages 72 à un arbre d'entrée horizontal 76. L'extrémité supérieure de l'arbre de rotation 74 est accouplée, via un réducteur mécanique 78, à un moteur électrique 80. L'extrémité inférieure de l'arbre de commande du basculement 74 est sortie de façon étanche à travers la plaque de base du carter 70 et est munie d'un pignon 82 qui s'engrène avec une couronne dentée 84 du rotor de commande 26. Reste à noter que la carcasse de support 12 est également munie d'une ouverture 86 pour le passage du pignon 82, qui est fermée de façon étanche par la plaque de base du carter 70. L'arbre de sortie horizontal 56 du carter 50 et arbre d'entrée horizontal 76 du carter 70 sont accouplés à l'aide d'un embrayage 90. Lorsque l'embrayage 90 est en position embrayée, les deux rotors 18, 28 sont solidaires en rotation, c'est-à-dire qu'il est impossible d'accélérer ou de décélérer l'un des rotors 18, 28 par rapport à l'autre. De plus, les différents rapports d'engrenages sont dimensionnés de façon à ce que les vitesses de rotation des deux rotors 18, 28 soient dans ce cas strictement identiques. Pour pouvoir accélérer ou décélérer l'un des rotors 18, 28 par rapport à l'autre, il faut par conséquent débrayer l'embrayage 90.

Le signe de référence 100 repère de façon globale un système de contrôle du dispositif de répartition de matières en vrac 10. Ce système de contrôle 100 comprend une unité centrale de contrôle 102, comprenant par exemple un automate programmable, qui contrôle le moteur électrique 60 via un premier variateur de fréquence 104 et le moteur électrique 80 via un second variateur de fréquence 106. Comme signaux de retour, l'unité centrale de contrôle 102 reçoit les signaux de deux capteurs angulaires 108 et 110. Le capteur angulaire 108 capte via un engrenage 112 la position angulaire de l'arbre de rotation 54 et dès lors du rotor de suspension 18. Le capteur angulaire 110 capte via un engrenage 114 la position angulaire de l'arbre de commande du basculement 74 et dès lors du rotor de commande du basculement 28. A l'aide du signal du capteur angulaire 108, l'unité centrale 102 calcule la vitesse instantanée de rotation de la goulotte de 32, ainsi que sa position. Sur base des signaux des deux capteurs angulaires 108 et 110, l'unité centrale 102 calcule l'inclinaison de la goulotte et la vitesse de basculement instantanée de la goulotte 32. Une unité de consigne 116 permet d'entrer dans l'unité centrale de contrôle 102 des valeurs de consigne en ce qui concerne notamment la vitesse de rotation, l'inclinaison et la vitesse de basculement de la goulotte 32.

Le fonctionnement du dispositif de répartition de matières en vrac 10 sera maintenant décrit plus en détail.

Supposons d'abord que la goulotte 32 est équilibrée de façon à basculer sous l'effet de son propre poids dans une position quasi verticale (c'est-à-dire dans une position dans laquelle son angle d'inclinaison, mesuré par rapport à la verticale, est minimal), et que le mécanisme de basculement est dimensionné de façon à accélérer le rotor de commande du basculement dans le sens de la flèche 120, respectivement le rotor de suspension dans le sens de la flèche 120', lorsque la goulotte 32 revient sous l'effet de son propre poids dans une position d'inclinaison minimale (ceci signifie notamment qu'il faut appliquer un moment au rotor de commande du basculement 28 pour maintenir celle-ci en équilibre pour un angle d'inclinaison donné). Supposons également que la goulotte 32 doit être entraînée en rotation à la vitesse N dans le sens de la flèche 120. Pour augmenter l'angle d'inclinaison de la goulotte 32 mesuré par rapport à la verticale, le variateur de fréquence 106 fait travailler le moteur électrique 80 comme génératrice, qui impose un moment de freinage au rotor de commande du basculement 28, alors que le moteur 60 entraîne le rotor de suspension 18 à la vitesse N dans le sens de la flèche 120. En effet, si le moment de freinage exercé sur le rotor de commande du basculement devient supérieur au moment nécessaire pour maintenir la goulotte en position d'équilibre, le rotor de commande du basculement 28 décélère par rapport au rotor de suspension 18, et l'angle d'inclinaison de la goulotte 32 mesuré par rapport à la verticale augmente. Plus le moment de freinage exercé sur le rotor de commande du basculement 28 dépasse le moment d'équilibre de la goulotte 32, plus la décélération du rotor de commande du basculement 28 par rapport au rotor de suspension 18 est élevée, et plus la vitesse de basculement de la goulotte 32 est importante. C'est naturellement le moteur 60 qui entraîne le rotor de suspension 18, qui doit fournir l'énergie nécessaire à vaincre le moment de freinage appliqué au rotor de commande du basculement 28 pour décélérer ce dernier. Cette énergie est partiellement compensée par l'énergie électrique que le variateur de fréquence 106 injecte dans le réseau d'alimentation électrique, lorsque le moteur 80 fonctionne en tant que génératrice pour produire le moment de freinage du rotor de commande du basculement 28. Si l'on veut maintenir la goulotte 32 en rotation à la vitesse N dans le sens de la flèche 120 avec un angle d'inclinaison constant, il faut régler à l'aide du variateur de fréquence 106 le moment du freinage du moteur 80 de façon à ce que la vitesse de rotation du rotor de commande de basculement 28 soit sensiblement identique à la vitesse de rotation N du rotor de suspension 18. Lorsque les vitesses de rotation des deux rotors 18, 28 sont quasi identiques, on embraye l'embrayage 90. A partir de ce moment les deux rotors 18, 28 sont solidaires en rotation et tournent à la même vitesse. L'angle d'inclinaison de la goulotte 32 est figé à sa valeur au moment de l'embrayage. Le moteur 80 n'a plus besoin de développer un couple de freinage, il peut dès lors tourner à vide. Il s'ensuit que le moteur 60 ne doit plus vaincre de moment de freinage du rotor de commande du basculement 28, ce qui signifie que sa puissance absorbée diminue considérablement. Pour diminuer de nouveau l'inclinaison de la goulotte 32 par rapport à la verticale, on débraye simplement l'embrayage 90. Le rotor de commande du basculement 28 subit, grâce à l'équilibrage particulier de la goulotte 32, une accélération dans les sens de la flèche 120, ce qui diminue le retard du rotor de commande du basculement 28 par rapport au rotor de suspension 18. Il s'ensuit que l'angle d'inclinaison de la goulotte 32 par rapport à la verticale diminue de nouveau. Pour contrôler la vitesse de basculement de la goulotte 32 vers sa position à angle d'inclinaison minimal, l'unité centrale de contrôle 102 peut faire travailler le moteur électrique 80 via le variateur de fréquence 106 comme génératrice, qui impose un moment de freinage au rotor de commande du basculement. Ce moment de freinage doit bien entendu rester inférieur au moment nécessaire pour maintenir la goulotte 32 en position d'équilibre. Supposons maintenant que la goulotte 32 doive tourner à la vitesse N dans le sens opposé, c'est-à-dire dans le sens de la flèche 120'. Pour augmenter l'angle d'inclinaison de la goulotte 32 mesuré par rapport à la verticale, le variateur de fréquence 106 fait travailler le moteur électrique 80 de façon à ce qu'il entraîne le rotor de commande du basculement 28 à une vitesse N'>N dans le sens de la flèche 120', et le variateur de fréquence 104 fait travailler le moteur électrique 60 comme génératrice, qui impose un moment de freinage au rotor de suspension 18. A l'aide du variateur de fréquence 106, l'unité de contrôle 102 règle la vitesse d'entraînement N' du rotor de commande du basculement 28 pour ajuster la vitesse de basculement de la goulotte 32 à la valeur souhaitée. A l'aide du variateur de vitesse 104, l'unité de contrôle 102 règle le moteur 60 de façon à ce que la vitesse de rotation du rotor de suspension 18 reste sensiblement égale à la valeur souhaitée N. C'est maintenant le moteur 80 qui doit fournir l'énergie nécessaire à vaincre le moment de freinage appliqué au rotor de suspension 18 pour maintenir ce dernier à la vitesse de rotation N. Cette énergie est partiellement compensée par l'énergie électrique que le variateur de fréquence 104 injecte dans le réseau d'alimentation électrique, lorsque le moteur 60 fonctionne en tant que génératrice pour produire le moment de freinage du rotor de suspension 18. Si l'on veut maintenir la goulotte 32 en rotation à la vitesse N dans le sens de la flèche 120' avec un angle d'inclinaison constant, il faut régler à l'aide du variateur de fréquence 106 le moment de freinage du rotor de basculement 28 jusqu'à l'obtention d'une vitesse de basculement nulle. A ce moment, la vitesse de rotation du rotor de commande de basculement 28 est identique à la vitesse de rotation N du rotor de suspension 18 et l'on embraye l'embrayage 90. Les deux rotors 18, 28 sont maintenant solidaires en rotation et tournent à la même vitesse. Le moteur 60 n'a plus besoin de développer un couple de freinage ; il peut tourner à vide. Il s'ensuit que le moteur 80 ne doit plus vaincre de moment de freinage du rotor de suspension 18, ce qui signifie que sa puissance absorbée diminue considérablement. Reste à noter que si l'embrayage 90 est embrayé, on peut aussi utiliser le moteur 60 pour entraîner la goulotte en rotation dans le sens de la flèche 120' à la vitesse N. Pour diminuer de nouveau l'inclinaison de la goulotte 32 par rapport à la verticale, on débraye d'abord l'embrayage 90. Le rotor de suspension 18 subit, grâce à l'équilibrage particulier de la goulotte 32, un moment d'entraînement dans les sens de la flèche 120' qui a tendance à l'accélérer dans le sens de rotation. A l'aide du variateur de fréquence 104, l'unité de contrôle 102 règle le moment de freinage du rotor de suspension 18 pour ajuster la vitesse de rotation de la goulotte 32 à la valeur souhaitée N. A l'aide du variateur de fréquence 106, l'unité de contrôle 102 règle le moment d'entraînement du rotor de commande du basculement 28 pour ajuster la vitesse de basculement de la goulotte 32 à la valeur souhaitée.. Si la vitesse de rotation N' du rotor de commande du basculement 28 est inférieure à la vitesse de rotation N du rotor de suspension 18, alors l'angle d'inclinaison de la goulotte 32 par rapport à la verticale diminue.

S'il n'est pas requis d'entraîner la goulotte 32 en rotation dans le sens de la flèche 120', le « moteur 80 » devra seulement remplir la fonction d'un frein apte à exercer un moment de freinage sur le rotor de commande du basculement 28. Dans ce cas, on pourra bien entendu remplacer le moteur 80 et son onduleur 106 par un dispositif de freinage mécanique, hydraulique, magnétique ou électromagnétique, équipé d'un dispositif de contrôle adéquat pour contrôler la variation de l'angle d'inclinaison de la goulotte 32 par freinage contrôlé du rotor de commande du basculement 28. On pourra alors aussi se passer du variateur de fréquence 104, qui alimente le moteur 60, à condition que ce dernier soit apte à délivrer une vitesse de rotation sensiblement constante lorsqu'il doit vaincre un couple de freinage variable.

Reste à noter qu'au lieu d'équilibrer la goulotte de façon à ce qu'elle bascule sous l'effet de son propre poids dans une position dans laquelle son angle d'inclinaison, mesuré par rapport à la verticale, est minimal, elle pourrait aussi être équilibrée de façon à ce qu'elle bascule sous l'effet de contrepoids dans une position dans laquelle son angle d'inclinaison, mesuré par rapport à la verticale, est maximal. Enfin, pour équilibrer la goulotte de façon à ce qu'elle revienne dans une position dans laquelle son angle d'inclinaison par rapport à la verticale est soit maximal soit minimal, on peut également avoir recours à des ressorts ou à des cylindres hydrauliques aptes à stocker de l'énergie potentielle lorsque la goulotte est basculée dans un sens, et la restituer lorsque la goulotte doit être basculée dans le sens inverse.

Supposons maintenant que le mécanisme de basculement est autobloquant, c'est-à-dire qu'il ne faut pas appliquer de moment au rotor de commande du basculement 28 pour maintenir l'angle d'inclinaison de la goulotte constant. Supposons encore que la goulotte 32 doit être entraînée en rotation à la vitesse N dans le sens de la flèche 120. Pour augmenter l'angle d'inclinaison de la goulotte 32 mesuré par rapport à la verticale, le variateur de fréquence 106 fait travailler le moteur électrique 80 comme génératrice, qui impose un moment de freinage au rotor de commande du basculement 28, alors que le moteur 60 entraîne le rotor de suspension 18 à la vitesse N dans le sens de la flèche 120. En effet, si le moment de freinage exercé sur le rotor de commande du basculement devient supérieur à une certaine valeur, le rotor de commande du basculement 28 décélère par rapport au rotor de suspension 18, et l'angle d'inclinaison de la goulotte 32 mesuré par rapport à la verticale augmente. Plus la décélération du rotor de commande du basculement 28 par rapport au rotor de suspension 18 est élevée, plus la vitesse de basculement de la goulotte 32 est importante. C'est naturellement le moteur 60 qui doit fournir l'énergie nécessaire à vaincre le moment de freinage appliqué au rotor de commande du basculement 28 pour décélérer ce dernier. Cette énergie est partiellement compensée par l'énergie électrique que le variateur de fréquence 106 injecte dans le réseau d'alimentation électrique, lorsque le moteur 80 fonctionne en tant que génératrice pour produire le moment de freinage du rotor de commande du basculement 28. Pour maintenir la goulotte 32 en rotation à la vitesse N dans le sens de la flèche 120 avec un angle d'inclinaison constant, il suffit de faire fonctionner le moteur 80 à vide. Cependant, si le mécanisme de basculement n'est pas parfaitement autobloquant pour tous les angles d'inclinaisons de la goulotte, il est recommandé alors d'embrayer quand même l'embrayage 90, afin d'assurer un angle d'inclinaison strictement constant pour la goulotte 32. Pour diminuer l'inclinaison de la goulotte 32 par rapport à la verticale, le variateur de fréquence 106 fait travailler le moteur électrique 80 de façon à ce qu'il entraîne le rotor de commande du basculement 28 à une vitesse N'>N dans le sens de la flèche 120, et le variateur de fréquence 104 fait travailler le moteur électrique 60 comme génératrice, qui impose un moment de freinage au rotor de suspension 18. A l'aide du variateur de fréquence 104, l'unité de contrôle 102 règle le moment de freinage du rotor de suspension 18 pour ajuster la vitesse de rotation de la goulotte 32 à la valeur souhaitée N. A l'aide du variateur de fréquence 106, l'unité de contrôle 102 règle la vitesse de rotation N' du rotor de basculement 28 pour ajuster la vitesse de basculement de la goulotte 32 à la valeur souhaitée. Supposons maintenant que le mécanisme de basculement est autobloquant et que la goulotte 32 doit être entraînée en rotation à la vitesse N dans le sens de la flèche 120'. Pour augmenter l'inclinaison de la goulotte 32 par rapport à la verticale, le variateur de fréquence 106 fait travailler le moteur électrique 80 de façon à ce qu'il entraîne le rotor de commande du basculement 28 à une vitesse N'>N dans le sens de la flèche 120', et le variateur de fréquence 104 fait travailler le moteur électrique 60 comme génératrice, qui impose un moment de freinage au rotor de suspension 18. A l'aide du variateur de fréquence 104, l'unité de contrôle 102 règle le moment de freinage du rotor de suspension 18 pour ajuster la vitesse de rotation de la goulotte 32 à la valeur souhaitée N. A l'aide du variateur de fréquence 106, l'unité de contrôle 102 règle la vitesse de basculement de la goulotte 32. Pour diminuer l'inclinaison de la goulotte 32 par rapport à la verticale, le variateur de fréquence 104 fait travailler le moteur électrique 60 de façon à ce qu'il entraîne le rotor de suspension 18 à la vitesse N dans le sens de la flèche 120', et le variateur de fréquence 106 fait travailler le moteur électrique 80 comme génératrice, qui impose un moment de freinage au rotor de commande du basculement 28. A l'aide du variateur de fréquence 106, l'unité de contrôle 102 règle le moment de freinage du rotor de commande du basculement 28 pour ajuster la vitesse de basculement de la goulotte 32 à la valeur souhaitée. A l'aide du variateur de fréquence 104, l'unité de contrôle 102 règle la vitesse de rotation du rotor de suspension 18 à la valeur N.

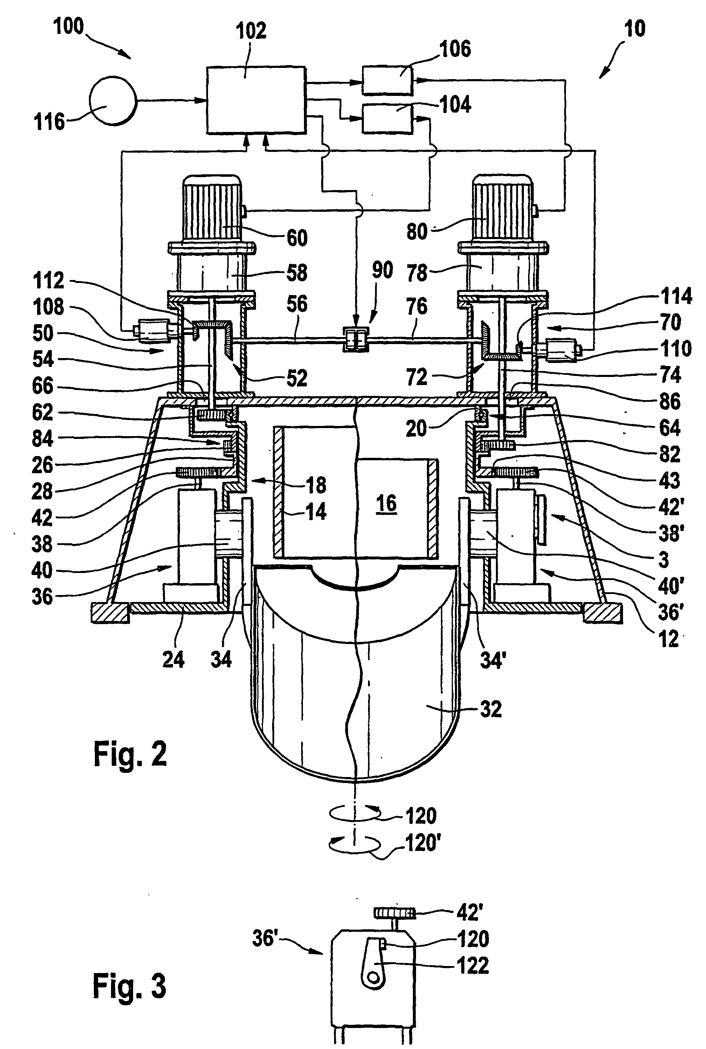

Lors de son montage ou lors de travaux de maintenance, le capteur angulaire 110 doit être initialisé, c'est-à-dire qu'une valeur de comptage initiale doit être associée à un angle d'inclinaison bien précis de la goulotte 32. En se référant à la Fig. 3, on voit que le mécanisme de suspension 36' est équipé d'une butée angulaire 120 et d'un levier 122 solidaire du tourillon de suspension 40'. Pour initialiser le capteur angulaire 110, on entraîne le rotor de basculement 28 à l'aide du moteur 80 pour faire buter le levier 122 contre la butée angulaire 120.

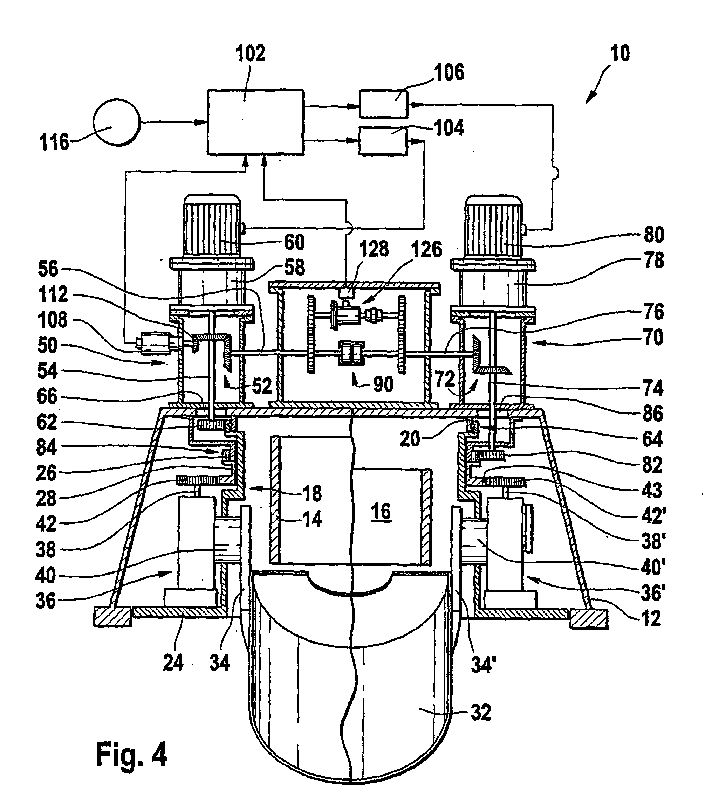

Dans l'exécution de la Fig. 4, on utilise un capteur angulaire différentiel 126 captant directement la position angulaire relative des deux rotors 18 et 28. Ce capteur angulaire différentiel 126 est monté en parallèle sur l'embrayage 90. Si le dispositif ne comprend pas d'embrayage 90 parce que le mécanisme de basculement de la goulotte est parfaitement autobloquant, alors le capteur angulaire différentiel 126 peut prendre la place de l'embrayage 90, pour être connecté directement entre les deux arbres 56 et 76. Vu que le boîtier du capteur angulaire différentiel 126 est également en rotation, on prévoit avantageusement une transmission sans fil des mesures vers un récepteur 128, qui est immobile en rotation.

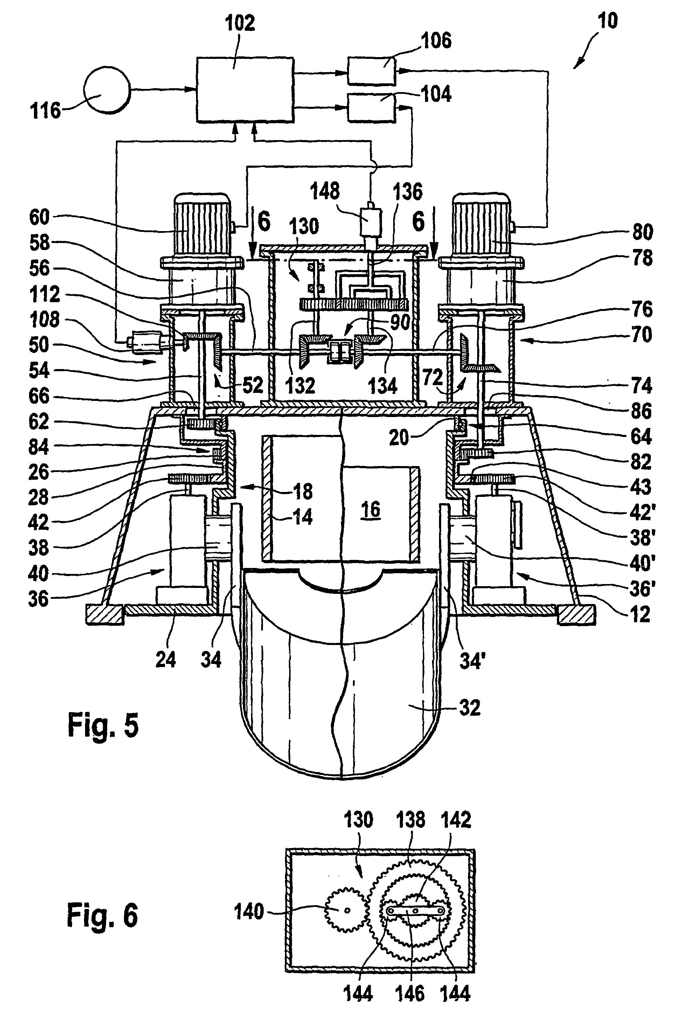

Dans l'exécution de la Fig. 5, on utilise un mécanisme différentiel de mesure 130 qui est connecté en parallèle sur l'embrayage 90. Ce mécanisme comprend un premier arbre d'entrée 132, un deuxième arbre d'entrée 134 et un arbre de sortie 136. Le premier arbre d'entrée est entraîné en rotation par l'arbre de sortie 56 du carter 50. Il capte dès lors la position angulaire du rotor de suspension 18. Le second arbre d'entrée est entraîné en rotation par l'arbre d'entrée 76 du carter 70. Il capte dès lors la position angulaire du rotor de commande du basculement 28. Ce mécanisme différentiel de mesure 130 comprend en outre un système à engrenages planétaires dimensionné de façon à ce que l'arbre de sortie 136 soit immobile en rotation lorsque les deux rotors 18, 28 ont la même vitesse de rotation, de façon à ce qu'il reproduise l'angle d'inclinaison de la goulotte 32 dans un repère immobile en rotation.

La Fig. 6 montre une vue en plan de ce système à engrenages planétaires. On voit une roue dentée annulaire horizontale 138, qui s'engrène à son périmètre extérieur avec un pignon 140 du premier arbre d'entrée 132 ; une roue solaire 142, qui est portée par le deuxième arbre d'entrée 134 ; deux pignons satellites 144, qui s'engrènent avec le périmètre intérieur de la roue dentée annulaire 138 et la roue solaire 142 ; et un porte-pignons satellites 146, auquel est accouplé l'arbre de sortie 136. Un simple capteur angulaire 148 capte alors la position angulaire de l'arbre de sortie 136 et détecte ainsi l'inclinaison de la goulotte dans un repère immobile en rotation.

## Revendications

1. Dispositif de répartition de matières en vrac comprenant:
une carcasse de support (12) ;
une goulotte de distribution (32) pour les matières en vrac ;
un rotor de suspension (18) monté dans ladite carcasse de support (12) de façon à pouvoir tourner autour d'un axe de rotation sensiblement vertical, ladite goulotte (32) étant suspendue audit rotor de suspension (18) de façon à pouvoir basculer autour d'un axe de basculement sensiblement horizontal ;
un premier moteur (60) apte à entraîner le rotor de suspension (18) en rotation autour de son axe de rotation dans un premier sens ;
un rotor de commande du basculement (28) monté dans ladite carcasse de support (12) de façon à pouvoir tourner autour d'un axe de rotation sensiblement vertical ; et
un mécanisme de basculement (36, 36') connecté entre la goulotte (32) et ledit rotor de commande du basculement (28), ce mécanisme de basculement (36, 36') étant conçu de façon à transformer une rotation différentielle du rotor de suspension (18) et du rotor de commande du basculement (28) en une variation de l'angle d'inclinaison de la goulotte (32) entre deux positions limites ;
**caractérisé en ce que**
ladite goulotte (32) est équilibrée de façon à revenir dans une première de ses deux positions limites, tout en accélérant ledit rotor de commande du basculement (28) via ledit mécanisme de basculement (36, 36') dans le sens de rotation dudit rotor de suspension (18) ;
un premier dispositif de freinage (80) est associé audit rotor de commande du basculement (28) de façon à pouvoir exercer un moment de freinage sur ledit rotor de commande du basculement (28) ; et
un premier dispositif de contrôle (102, 106) est associé audit premier dispositif de freinage (80), de façon à contrôler la variation de l'angle d'inclinaison de la goulotte (32) par freinage contrôlé dudit rotor de commande du basculement (28).

2. Dispositif selon la revendication 1, **caractérisé par** un mécanisme de transmission (52, 56, 72, 76) à embrayage (90) qui est connecté entre ledit rotor de suspension (18) et ledit rotor de commande du basculement (28), de façon à ce qu'en position embrayée dudit embrayage (90), ce mécanisme rende les deux rotors (18, 28) solidaires en rotation en assurant des vitesses de rotations égales pour les deux rotors (18, 28).

3. Dispositif selon la revendication 1 ou 2, **caractérisé par** :
un second moteur (80) qui est associé audit rotor de commande du basculement (28) de façon à pouvoir entraîner ce dernier autour de son axe de rotation dans un deuxième sens de rotation, opposé audit premier sens de rotation;
un second dispositif de freinage (60) qui est associé audit rotor de suspension (18), de façon à pouvoir exercer un moment de freinage sur ledit rotor de suspension (18).

4. Dispositif selon la revendication 3, **caractérisé par** :
un second dispositif de contrôle (102, 104) qui est associé audit second dispositif de freinage (60), de façon à contrôler la variation de l'angle d'inclinaison de la goulotte (32) en rotation dans ledit deuxième sens par variation du moment de freinage dudit rotor de suspension (18).

5. Dispositif selon la revendication 4, **caractérisé par** :
un variateur de vitesse (106) associé audit second moteur (80) ; et
un dispositif de contrôle associé audit variateur de vitesse (106) de façon à contrôler la vitesse de rotation dudit rotor de suspension (18), par variation de la vitesse de rotation dudit rotor de commande du basculement (28).

6. Dispositif selon la revendication 3, **caractérisé par** :
un variateur de vitesse (106) associé audit second moteur (80) ; et
un dispositif de contrôle associé audit variateur de vitesse (106) de façon à contrôler la vitesse de basculement de ladite goulotte par variation de la vitesse de rotation dudit rotor de commande du basculement (28), la vitesse de rotation dudit rotor de suspension (18) étant maintenue constante.

7. Dispositif selon l'une quelconque des revendications 3 à 6, **caractérisé en ce que** ledit premier moteur (60) et ledit second dispositif de freinage (60), respectivement ledit second moteur (80) et ledit premier dispositif de freinage (80), forment une unité comprenant une machine électrique tournante alimentée par un circuit électrique de façon à pouvoir fonctionner en mode moteur, développant un couple d'entraînement, et en mode génératrice, développant un couple de freinage, dans au moins un sens de rotation.

8. Dispositif selon la revendication 7, **caractérisé**
**en ce que** la machine électrique tournante est un moteur électrique (60, 80) équipé d'un réducteur de vitesse (58, 78), et
**en ce que** ledit circuit électrique est un convertisseur statique de fréquence (104, 106).

9. Dispositif selon l'une quelconque des revendications 1 à 8, **caractérisé en ce que** ledit premier dispositif de contrôle (102, 106), respectivement ledit deuxième dispositif de contrôle, comprend :
un premier capteur angulaire (108) captant la position angulaire dudit rotor de suspension (18) ;
un deuxième capteur angulaire (110) captant la position angulaire dudit rotor de commande du basculement (28) ; et
des moyens de calcul (102) pour calculer la position angulaire relative des deux rotors (18, 28).

10. Dispositif selon l'une quelconque des revendications 1 à 8, **caractérisé en ce que** ledit premier dispositif de contrôle (102, 106), respectivement ledit deuxième dispositif de contrôle, comprend :
un capteur angulaire différentiel (126) captant la position angulaire relative des deux rotors (18, 28).

11. Dispositif selon l'une quelconque des revendications 1 à 8, **caractérisé en ce que** ledit premier dispositif de contrôle (102, 106), respectivement ledit deuxième dispositif de contrôle (102, 104), comprend :
un mécanisme différentiel de mesure (130), avec un premier arbre d'entrée (132), un deuxième arbre d'entrée (134) et un arbre de sortie (136), ledit premier arbre d'entrée (132) étant entraîné en rotation par ledit rotor de suspension (18), ledit second arbre d'entrée (134) étant entraîné en rotation par ledit rotor de commande du basculement (28), et ledit mécanisme différentiel de mesure (130) étant dimensionné de façon à ce que ledit arbre de sortie (136) soit immobile en rotation lorsque les deux rotors (18, 28) ont la même vitesse de rotation ; et
un capteur angulaire (148) captant la position angulaire dudit arbre de sortie (136).

12. Dispositif de répartition de matières en vrac comprenant:
une carcasse de support (12) ;
une goulotte de distribution (32) pour les matières en vrac ;
un rotor de suspension (18) monté dans ladite carcasse de support (12) de façon à pouvoir tourner autour d'un axe de rotation sensiblement vertical, ladite goulotte (32) étant suspendue audit rotor de suspension (18) de façon à pouvoir basculer autour d'un axe de basculement sensiblement horizontal ;
un premier moteur (60) apte à entraîner le rotor de suspension (18) en rotation autour de son axe dans un premier sens ;
un rotor de commande du basculement (28) monté dans ladite carcasse de support (12) de façon à pouvoir tourner autour d'un axe de rotation sensiblement vertical ; et
un mécanisme de basculement (36, 36') connecté entre la goulotte (32) et ledit rotor de commande du basculement (28), ce mécanisme de basculement (36, 36') étant conçu de façon à transformer une rotation différentielle du rotor de suspension (18) et du rotor de commande du basculement (28) en une variation de l'angle d'inclinaison de la goulotte (32) entre deux positions limites ;
**caractérisé en ce que**
un premier dispositif de freinage (80) est associé audit rotor de commande du basculement (28) de façon à pouvoir exercer moment de freinage sur ledit rotor de commande du basculement (28) ;
un second moteur (80) est associé au rotor de commande du basculement (28) de façon à pouvoir entraîner ce dernier autour de son axe dans ledit premier sens à une vitesse de rotation supérieure à la vitesse de rotation souhaitée pour la goulotte (32) ;
un second dispositif de freinage (60) est associé audit rotor de suspension (18), de façon à pouvoir exercer un moment de freinage sur ledit rotor de suspension (18) ; et
un dispositif de contrôle (102, 104, 106) apte à pouvoir contrôler le basculement de la goulotte (32) dans un premier sens, par entraînement dudit rotor de suspension (18) dans ledit premier sens et par freinage contrôlé dudit rotor de commande du basculement (28) à l'aide dudit premier dispositif de freinage (80), et dans un deuxième sens, par entraînement dudit rotor de commande du basculement (28) dans ledit premier sens à une vitesse de rotation supérieure à la vitesse de rotation souhaitée pour la goulotte (32) et par freinage contrôlé dudit rotor de suspension (18) à l'aide dudit second dispositif de freinage (60).

13. Dispositif selon la revendication 12, **caractérisé en ce que** ledit mécanisme de basculement (36, 36') est un mécanisme autobloquant.

14. Dispositif selon la revendication 12, **caractérisé par** un mécanisme de transmission (52, 56, 72, 76) à embrayage (90) qui est connecté entre ledit rotor de suspension (18) et ledit rotor de commande du basculement (28), de façon à ce qu'en position embrayée dudit embrayage (90), ce mécanisme rende les deux rotors (18, 28) solidaires en rotation en assurant des vitesses de rotations égales pour les deux rotors (18, 28).

15. Dispositif selon l'une quelconque des revendications 12 à 14, **caractérisé en ce que** :
ledit premier moteur (60) est apte à entraîner le rotor de suspension (18) dans un deuxième sens de rotation, opposé audit premier sens de rotation, à la vitesse de rotation souhaitée pour la goulotte (32) ; et
ledit second moteur (80) est apte à entraîner le rotor de commande du basculement (28) dans ledit deuxième sens de rotation, à une vitesse de rotation supérieure à la vitesse de rotation souhaitée pour la goulotte (32).

16. Dispositif selon la revendication 13, **caractérisé en ce que** lors d'une rotation de la goulotte (32) dans ledit deuxième sens, ledit dispositif de contrôle associé audit premier dispositif de freinage (80), audit second dispositif de freinage (60) et audit second moteur (80), est apte à contrôler le basculement de la goulotte (32) :
dans un premier sens, par entraînement dudit rotor de commande du basculement (28) à l'aide dudit second moteur (80) dans ledit deuxième sens, à une vitesse de rotation supérieure à la vitesse de rotation souhaitée pour la goulotte (32), et un freinage contrôlé dudit rotor de suspension (18) à l'aide dudit second dispositif de freinage (60) ; et
dans un deuxième sens, par entraînement dudit rotor de suspension (18) dans ledit deuxième sens et un freinage contrôlé dudit rotor de commande du basculement (28) à l'aide dudit premier dispositif de freinage (80).

17. Dispositif selon l'une quelconque des revendications 12 à 16, **caractérisé en ce que** :
un variateur de vitesse (106) est associé audit second moteur (80) ; et
ledit dispositif de contrôle est apte à contrôler ledit variateur de vitesse (106) de façon à contrôler la vitesse de rotation dudit rotor de suspension (18), par variation de la vitesse de rotation dudit rotor de commande du basculement (28).

18. Dispositif selon l'une quelconque des revendications 12 à 16, **caractérisé en ce que** :
un variateur de vitesse (106) est associé audit second moteur (80) ; et
ledit dispositif de contrôle est apte à contrôler ledit variateur de vitesse (106) de façon à contrôler la vitesse de basculement de ladite goulotte (32), par variation de la vitesse de rotation dudit rotor de commande du basculement (28).

19. Dispositif selon la selon l'une quelconque des revendications 12 à 18, **caractérisé en ce que** ledit premier moteur (60) et ledit second dispositif de freinage (60), respectivement ledit second moteur (80) et ledit premier dispositif de freinage (80), forment une unité comprenant une machine électrique tournante alimentée par un circuit électrique de façon à pouvoir fonctionner en mode moteur, développant un couple d'entraînement, et en mode génératrice, développant un couple de freinage, dans au moins un sens de rotation.

20. Dispositif selon la revendication 19, **caractérisé**
**en ce que** machine électrique tournante est un moteur électrique (60, 80) équipé d'un réducteur de vitesse (58, 78), et
**en ce que** ledit circuit électrique est un convertisseur statique de fréquence (104, 106) permettant un fonctionnement de ladite machine électrique tournante dans les quatre quadrants du diagramme vitesse de rotation/couple développé.

21. Dispositif selon l'une quelconque des revendications 12 à 20, **caractérisé en ce que** ledit dispositif de contrôle comprend :
un premier capteur angulaire (108) captant la position angulaire dudit rotor de suspension (18) ;
un deuxième capteur angulaire (110) captant la position angulaire dudit rotor de commande du basculement (28) ; et
des moyens de calcul (102) pour calculer la position angulaire relative des deux rotors (18, 28).

22. Dispositif selon l'une quelconque des revendications 12 à 21, **caractérisé en ce que** ledit dispositif de contrôle comprend :
un capteur angulaire différentiel (126) captant la position angulaire relative des deux rotors (18, 28).

23. Dispositif selon l'une quelconque des revendications 12 à 21, **caractérisé en ce que** ledit dispositif de contrôle comprend :
un mécanisme différentiel de mesure (130), avec un premier arbre d'entrée (132), un deuxième arbre d'entrée (134) et un arbre de sortie (136), ledit premier arbre d'entrée (132) étant entraîné en rotation par ledit rotor de suspension (18), ledit second arbre d'entrée (134) étant entraîné en rotation par ledit rotor de commande du basculement (28), et ledit mécanisme différentiel de mesure (130) étant dimensionné de façon à ce que ledit arbre de sortie (136) soit immobile en rotation lorsque les deux rotors (18, 28) ont la même vitesse de rotation ; et
un capteur angulaire (148) captant la position angulaire dudit arbre de sortie (136).

24. Dispositif selon l'une quelconque des revendications 12 à 21, **caractérisé en ce que** ledit dispositif de contrôle comprend :
un capteur d'inclinaison de la goulotte (32) en rotation avec la goulotte (32), un émetteur associé audit capteur d'inclinaison et au moins un récepteur monté de façon immobile en rotation dans ladite carcasse de support (12).

## Patentansprüche

1. Verteilvorrichtung für Schüttgut, mit
einem Traggestell (12);
einer Verteilerschurre (32) für Schüttgut;
einem derart in dem Traggestell (12) montierten Aufhängungsrotor (18), dass er in der Lage ist, um eine wesentlich senkrechte Achse herum zu drehen, wobei die genannte Schurre (32) an dem genannten Aufhängungsrotor (18) derart aufgehängt ist, dass sie in der Lage ist, um eine wesentlich waagerechte Achse herum zu kippen;
einem ersten Motor (60), der in der Lage ist, den Aufhängungsrotor (18) in Drehbewegung um seine Achse herum in eine erste Richtung anzutreiben;
einem in dem genannten Traggestell (12) derart montierten Steuerrotor für die Kippbewegung (28), dass er in der Lage ist, um eine wesentlich senkrechte Drehachse herum zu drehen; und
einem zwischen der Schurre (32) und dem genannten Steuerrotor für die Kippbewegung (28) montierten Kippmechanismus (36, 36'), wobei dieser Kippmechanismus (36, 36') derart ausgestaltet ist, dass er eine Differentialdrehung des Aufhängungsrotors (18) und des Steuerrotors für die Kippbewegung (28) in eine Verstellung des Neigungswinkels der Schurre (32) zwischen zwei Grenzpositionen umsetzt;
**dadurch gekennzeichnet, dass**
die genannte Schurre (32) derart ausgewuchtet ist, dass sie in eine erste ihrer Grenzpositionen zurückgeht, wobei sie den genannten Steuerrotor für die Kippbewegung (28) über den genannten Kippmechanismus (36, 36'), in die Drehrichtung des genannten Aufhängungsrotors (18) beschleunigt;
eine erste Bremsvorrichtung (80) der dem genannten Steuerrotor für die Kippbewegung (28) derart zugeordnet ist, dass sie in der Lage ist, dem genannten Steuerrotor für die Kippbewegung (28) ein Bremsmoment aufzuerlegen; und
eine erste Kontrolleinrichtung (102, 106) der der ersten Bremsvorrichtung (80) derart zugeordnet ist, dass sie die Verstellung des Neigungswinkels der Schurre (32) durch kontrolliertes Bremsen des genannten Steuerrotors für die Kippbewegung (28) kontrolliert.

2. Vorrichtung nach Anspruch 1, **gekennzeichnet durch** ein Übersetzungsgetriebe (52, 56, 72, 76) mit Kupplung (90), das zwischen dem genannten Aufhängungsrotor (18) und dem genannten Steuerrotor für die Kippbewegung (28) derart montiert ist, dass in eingekuppelter Stellung der genannten Kupplung (90), dieses Übersetzungsgetriebe die zwei Rotore (18, 28) in ihrer Drehbewegung vereinigt, indem es für eine gleiche Drehgeschwindigkeit der zwei Rotore (18, 28) sorgt.

3. Vorrichtung nach einem der Ansprüche 1 oder 2, **gekennzeichnet durch**:
einen dem Steuerrotor für die Kippbewegung (28) derart zugeordneten zweiten Motor (80), dass er in der Lage ist, diesen in eine zweite, der genannten ersten Drehrichtung entgegengesetzte Drehrichtung um seine Drehachse herum anzutreiben;
eine zweite, dem genannten Aufhängungsrotor (18) derart zugeordnete Bremsvorrichtung (60), dass sie in der Lage ist, dem genannten Aufhängungsrotor (18) ein Bremsmoment aufzuerlegen.

4. Vorrichtung nach Anspruch 3, **gekennzeichnet durch**:
eine zweite, der zweiten Bremsvorrichtung (60) derart zugeordnete Kontrolleinrichtung (102, 104), dass sie die Verstellung des Neigungswinkels der Schurre (32) in Drehbewegung in die zweite genannte Richtung, **durch** Verstellung des Bremsmoments des genannten Aufhängungsrotors (18), kontrolliert.

5. Vorrichtung nach Anspruch 4, **gekennzeichnet durch**:
einen dem zweiten Motor (80) zugeordneten Regelantrieb (106); und
einer dem genannten Regelantrieb (106) derart zugeordneten Kontrolleinrichtung, dass sie die Drehgeschwindigkeit des genannten Aufhängungsrotors (18), **durch** Verstellung der Drehgeschwindigkeit des genannten Steuerrotors für die Kippbewegung (28), kontrolliert.

6. Vorrichtung nach Anspruch 3, **gekennzeichnet durch**:
einen dem genannten zweiten Motor (80) zugeordneten Regelantrieb (106); und
einer dem genannten Regelantrieb (106) derart zugeordneten Kontrolleinrichtung, dass sie die Kippgeschwindigkeit der genannten Schurre, **durch** Verstellung der Drehgeschwindigkeit des genannten Steuerrotors für die Kippbewegung (28) kontrolliert, wobei die Drehgeschwindigkeit des genannten Aufhängungsrotors (18) gleichbleibend erhalten wird.

7. Vorrichtung nach einem der Ansprüche 3 bis 6, **dadurch gekennzeichnet, dass** der genannte erste Motor (60) und die genannte zweite Bremsvorrichtung (60), beziehungsweise der genannte zweite Motor (80) und die genannte erste Bremsvorrichtung (80) eine Einheit bilden, welche eine drehende Elektromaschine umfasst, die über einen Stromkreis versorgt wird, um als ein Antriebsmoment erzeugender Motor und als ein Bremsmoment erzeugender Stromerzeuger, in mindestens eine Drehrichtung funktionieren zu können.

8. Vorrichtung nach Anspruch 7, **dadurch gekennzeichnet,**
**dass** die drehende Elektromaschine ein mit einem Drehzahlminderer (58, 78) ausgestatteter Elektromotor (60, 80) ist,
und **dass** der genannte Stromkreis ein statischer Frequenzumsetzer (104, 106) ist.

9. Vorrichtung nach einem der Ansprüche 1 bis 8, **dadurch gekennzeichnet, dass** die genannte erste Kontrolleinrichtung (102, 106), beziehungsweise die genannte zweite Kontrolleinrichtung:
einen ersten Winkelgeber (108), der die Winkelposition des genannten Aufhängungsrotors (18) erfasst;
einen zweiten Winkelgeber (110) der die Winkelposition des genannten Steuerrotors für die Kippbewegung (28) erfasst;
Berechnungsmittel (102) um die relative Winkelposition der zwei Rotore (18, 28) zu berechnen
umfasst.

10. Vorrichtung nach einem der Ansprüche 1 bis 8, **dadurch gekennzeichnet, dass** die genannte erste Kontrolleinrichtung (102, 106), beziehungsweise die genannte zweite Kontrolleinrichtung
einen Differentialwinkelgeber (126), der die relative Winkelposition der zwei Rotore (18, 28) erfasst
umfasst.

11. Vorrichtung nach einem der Ansprüche 1 bis 8, **dadurch gekennzeichnet, dass** die genannte erste Vorrichtung (102, 106), beziehungsweise die genannte zweite Vorrichtung (102, 104):
einen Differentialmessmechanismus (130) mit einer ersten Eingangswelle (132), einer zweiten Eingangswelle (134) und einer Ausgangswelle (136) umfasst, wobei die erste Eingangswelle (132) über den genannten Aufhängungsrotor (18) in eine Drehbewegung angetrieben wird, und die genannte zweite Eingangswelle (134) über den genannten Steuerrotor für die Kippbewegung (28) in eine Drehbewegung angetrieben wird und der genannte Differentialmessmechanismus (130) derart ausgelegt ist, dass die genannte Ausgangswelle (136) keine Drehbewegung ausführt, wenn die zwei Rotore (18, 28) dieselbe Drehgeschwindigkeit aufweisen; und
einen Winkelgeber (148), der die Winkelposition der genannten Ausgangswelle (136) erfasst
umfasst.

12. Verteilvorrichtung für Schüttgut, mit:
einem Traggestell (12);
einer Verteilerschurre (32) für das Schüttgut;
einem derart in dem Traggestell (12) montierten Aufhängungsrotor (18), dass er in der Lage ist, um eine wesentlich senkrechte Achse herum zu drehen, wobei die genannte Schurre (32) an dem genannten Aufhängungsrotor (18) derart aufgehängt ist, dass sie in der Lage ist, um eine wesentlich waagerechte Achse herum zu kippen;
einem ersten Motor (60), der in der Lage ist, den Aufhängungsrotor (18) in Drehbewegung um seine Achse in eine erste Richtung anzutreiben;
einem in dem genannten Traggestell (12) derart montierten Steuerrotor für die Kippbewegung (28), dass er in der Lage ist, um eine wesentlich senkrechte Drehachse herum zu drehen; und
einem zwischen der Schurre (32) und dem genannten Steuerrotor für die Kippbewegung (28) montierten Kippmechanismus (36, 36'), wobei dieser Kippmechanismus (36, 36') derart ausgestaltet ist, dass er eine Differentialdrehung des Aufhängungsrotors (18) und des Steuerrotors für die Kippbewegung (28) in eine Verstellung des Neigungswinkels der Schurre (32) zwischen zwei Grenzpositionen umsetzt;
**dadurch gekennzeichnet, dass**
eine erste Bremsvorrichtung (80) dem genannten Steuerrotor für die Kippbewegung (28) derart zugeordnet ist, dass sie in der Lage ist, dem genannten Steuerrotor für die Kippbewegung (28) ein Bremsmoment aufzuerlegen;
ein zweiter Motor (80) der dem Steuerrotor für die Kippbewegung (28) derart zugeordnet ist, dass er in der Lage ist, diesen um seine Achse herum in die genannte erste Drehrichtung anzutreiben, mit einer Drehgeschwindigkeit die größer ist , als die für die Schurre (32) erwünschte Drehgeschwindigkeit;
eine zweite Bremsvorrichtung (60) der dem genannten Aufhängungsrotor (18) derart zugeordnet ist, dass sie in der Lage ist, auf den genannten Aufhängungsrotor (18) ein Bremsmoment auszuüben; und
eine Kontrolleinrichtung (102, 104, 106), die in der Lage ist, durch Antrieb des genannten Aufhängungsrotors (18) in die genannte erste Richtung und durch kontrollierte Bremsung des genannten Steuerrotors für die Kippbewegung (28) mit Hilfe der genannten ersten Bremsvorrichtung (80), die Kippbewegung der Schurre (32) in eine erste Richtung zu kontrollieren und durch Antrieb des genannten Steuerrotors für die Kippbewegung (28) in die genannte erste Richtung, mit einer Drehgeschwindigkeit, die größer ist als die für die Schurre (32) erwünschte Drehgeschwindigkeit und durch kontrollierte Bremsung des genannten Aufhängungsrotors (18) mit Hilfe der genannten zweiten Bremsvorrichtung (60) die Kippebewegung der Schurre (32) in eine zweite Richtung zu kontrollieren.

13. Vorrichtung nach Anspruch 12, **dadurch gekennzeichnet, dass** der genannte Kippmechanismus (36, 36') ein selbsthemmender Mechanismus ist.

14. Vorrichtung nach Anspruch 12, **gekennzeichnet durch** ein Übersetzungsgetriebe (52, 56, 72, 76) mit Kupplung (90), das zwischen dem genannten Aufhängungsrotor (18) und dem genannten Steuerrotor für die Kippbewegung (28) derart montiert ist, dass in eingekuppelter Stellung der genannten Kupplung (90), dieses Übersetzungsgetriebe die zwei Rotore (18, 28) in ihrer Drehbewegung vereinigt, indem es für eine gleiche Drehgeschwindigkeit der zwei Rotore (18, 28) sorgt.

15. Vorrichtung nach einem der Ansprüche 12 bis 14, **dadurch gekennzeichnet dass**
der genannte erste Motor (60) in der Lage ist, den Aufhängungsrotor (18) in eine der genannten ersten Drehrichtung entgegengesetzte zweite Drehrichtung, mit der für die Schurre (32) erwünschten Drehgeschwindigkeit anzutreiben; und
der genannte zweite Motor (80) in der Lage ist, den Steuerrotor für die Kippbewegung (28) in die genannte zweite Drehrichtung, mit einer Geschwindigkeit, die größer ist, als die für die Schurre (32) erwünschte Geschwindigkeit anzutreiben.

16. Vorrichtung nach Anspruch 13, **dadurch gekennzeichnet, dass** bei einer Drehbewegung der Schurre (32) in die genannte zweite Richtung, die genannte der genannten ersten Bremsvorrichtung (80), der genannten zweiten Bremsvorrichtung (60) und dem genannten zweiten Motor (80), zugeordnete Kontrolleinrichtung in der Lage ist, die Kippbewegung der Schurre (32) zu kontrollieren; und zwar
in eine erste Richtung, durch Antrieb des genannten Steuerrotors für die Kippbewegung (28) in die genannte zweite Richtung, mit Hilfe des genannten zweiten Motors (80), bei einer Drehgeschwindigkeit die größer ist, als die für die Schurre (32) erwünschte Drehgeschwindigkeit und durch kontrollierte Bremsung des genannten Aufhängungsrotors (18), mit Hilfe der zweiten Bremsvorrichtung (60); und
in eine zweite Richtung, durch Antrieb des genannten Aufhängungsrotors (18) in die genannte zweite Richtung und durch kontrollierte Bremsung des genannten Steuerrotors für die Kippbewegung (28), mit Hilfe der ersten Bremsvorrichtung (80);

17. Vorrichtung nach einem der Ansprüche 12 bis 16, **dadurch gekennzeichnet, dass**
dem genannten zweiten Motor (80) ein Regelantrieb (106) zugeordnet ist; und
die genannte Kontrolleinrichtung in der Lage ist, den genannten Regelantrieb (106) derart zu kontrollieren, dass sie die Drehgeschwindigkeit des genannten Aufhängungsrotors (18) durch Verstellung der Drehgeschwindigkeit des genannten Steuerrotors für die Kippbewegung (28) kontrolliert.

18. Vorrichtung nach einem der Ansprüche 12 bis 16, **dadurch gekennzeichnet, dass**
dem genannten zweiten Motor (80) ein Regelantrieb (106) zugeordnet ist; und
die genannte Kontrolleinrichtung in der Lage ist, den genannten Regelantrieb (106) derart zu kontrollieren, dass sie die Kippgeschwindigkeit der genannten Schurre (32) durch Verstellung der Drehgeschwindigkeit des genannten Steuerrotors für die Kippbewegung (28) kontrolliert.

19. Vorrichtung nach einem der Ansprüche 12 bis 18, **dadurch gekennzeichnet, dass** der genannte erste Motor (60) und die genannte zweite Bremsvorrichtung (60), beziehungsweise der genannte zweite Motor (80) und die genannte erste Bremsvorrichtung (80) eine Einheit bilden, welche eine drehende Elektromaschine umfasst, die über einen Stromkreis versorgt wird, um als ein Antriebsmoment erzeugender Motor und als ein Bremsmoment erzeugender Stromerzeuger, in mindestens eine Drehrichtung funktionieren zu können.

20. Vorrichtung nach Anspruch 19, **dadurch gekennzeichnet,**
**dass** die drehende Elektromaschine ein mit einem Drehzahlminderer (58, 78) ausgestatteter Elektromotor (60, 80) ist,
und **dass** der genannte Stromkreis ein statischer Frequenzumsetzer (104, 106) ist, der einen Betrieb der genannten drehenden Elektromaschine in den vier Quadranten des Diagramms Drehgeschwindigkeit / entwickeltes Moment ermöglicht.

21. Vorrichtung nach einem der Ansprüche 12 bis 20, **dadurch gekennzeichnet, dass** die genannte Kontrolleinrichtung:
einen ersten Winkelgeber (108), der die Winkelposition des genannten Aufhängungsrotors (18) erfasst;
einen zweiten Winkelgeber (110), der die Winkelposition des genannten Steuerrotors für die Kippbewegung (28) erfasst;
und Berechnungsmittel (102), um die relative Winkelposition der zwei Rotore (18, 28) zu berechnen
umfasst.

22. Vorrichtung nach einem der Ansprüche 12 bis 21, **dadurch gekennzeichnet, dass** die genannte Kontrolleinrichtung:
einen Differentialwinkelgeber (126) umfasst, der die relative Winkelposition der zwei Rotore (18, 28) erfasst.

23. Vorrichtung nach einem der Ansprüche 12 bis 21, **dadurch gekennzeichnet, dass** die genannte Kontrolleinrichtung:
einen Differentialmessmechanismus (130) mit einer ersten Eingangswelle (132), einer zweiten Eingangswelle (134) und einer Ausgangswelle (136) umfasst, wobei die erste Eingangswelle (132) durch den genannten Aufhängungsrotor (18) in eine Drehbewegung angetrieben wird, die genannte zweite Eingangswelle (134) durch den genannten Steuerrotor für die Kippbewegung (28) in eine Drehbewegung angetrieben wird und der genannte Differentialmessmechanismus (130) derart ausgelegt ist, dass die genannte Ausgangswelle (136) keine Drehbewegung ausübt, wenn die zwei Rotore (18, 28) die selbe Drehgeschwindigkeit aufweisen;
und einen Winkelgeber (148), der die Winkelposition der genannten Ausgangswelle (136) erfasst
umfasst.

24. Vorrichtung nach einem der Ansprüche 12 bis 21, **dadurch gekennzeichnet, dass** die genannte Kontrolleinrichtung:
einen Neigungsgeber für die Schurre (32), der mit der Schurre (32) dreht, einen dem genannten Neigungsgeber zugeordneten Sender, sowie mindestens einen in dem Traggestell (12) nicht drehend montierten Empfänger
umfasst.

## Claims

1. A device for distributing bulk materials comprising:
a support frame (12);
a distribution chute (32) for the bulk materials;
a suspension rotor (18) mounted in said support frame (12) so that it may rotate around a substantially vertical axis of rotation, said chute (32) being suspended to said suspension rotor (18) so that it may tilt around a substantially horizontal tilt axis;
a first motor (60) able to drive the suspension rotor (18) into rotation around its axis of rotation in a first direction;
a tilt controlling rotor (28) mounted in said support frame (12) so that it may rotate around a substantially vertical axis of rotation; and
a tilting mechanism (36, 36') connected between the chute (32) and said tilt controlling rotor (28), this tilting mechanism (36, 36') being designed in order to transform a differential rotation of the suspension rotor (18) and of the tilt controlling rotor (28) into a variation of the angle of inclination of the chute (32) between two limiting positions;
**characterized in that**
said chute (32) is balanced so that it returns to a first of its two limiting positions, while accelerating said tilt controlling rotor (28) via said tilting mechanism (36, 36') in the direction of rotation of said suspension rotor (18);
a first braking device (80) is associated with said tilt controlling rotor (28) so that it may exert a braking moment on said tilt controlling rotor (28); and
a first control device (102, 106) is associated with said first braking device (80) in order to control the variation of the angle of inclination of the chute (32) by controlled braking of said tilt controlling rotor (28).

2. The device according to claim 1, **characterized by**:
a transmission mechanism (52, 56, 72, 76) with a clutch (90) which is connected between said suspension rotor (18) and said tilt controlling rotor (28), so that in the engaged position of said clutch (90), this mechanism makes both rotors (18, 28) interdependent in rotation while providing equal speeds of rotation for both rotors (18, 28).

3. The device according to claim 1 or 2, **characterized by**:
a second motor (80) which is associated with said tilt controlling rotor (28) so that it may drive the latter around its axis of rotation in a second direction of rotation, opposite to said first direction of rotation;
a second braking device (60) which is associated with said suspension rotor (18) so that it may exert a braking moment on said suspension rotor (18).

4. The device according to claim 3, **characterized by**:
a second control device (102, 104) which is associated with said second braking device (60), in order to control the variation of the angle of inclination of the chute (32) rotating in said second direction by varying the braking moment of said suspension rotor (18).

5. The device according to claim 4, **characterized by**:
a variable speed drive (106) associated with said second motor (80); and
a control device associated with said variable speed drive (106) in order to control the speed of rotation of said suspension rotor (18), by varying the speed of rotation of said tilt controlling rotor (28).

6. The device according to claim 3, **characterized by**:
a variable speed drive (106) associated with said second motor (80); and
a control device associated with said variable speed drive (106) in order to control the speed of tilting of said chute by varyring said speed of rotation of said tilt controlling rotor (28) with the speed of rotation of said suspension rotor (18) being kept constant.

7. The device according to any of claims 3 to 6, **characterized in that** said first motor (60) and said second braking device (80), said second motor (80) and said first braking device (60), respectively, forms a unit comprising a rotating electric machine powered by an electrical circuit so that it may operate in motor mode, developing a driving torque, and in generator mode, a braking torque in at least one direction of rotation.

8. The device according to claim 7, **characterized**
**in that** the electric rotating machine is an electric motor (60, 80) equipped with a speed reducer (58, 78), and
**in that** said electric circuit is a static frequency converter (104, 106).

9. The device according to any of claims 1 to 8, **characterized in that** said first control device (102, 106), said second control device, respectively, comprises:
a first angle sensor (108) sensing the angular position of said suspension rotor (18);
a second angle sensor (110) sensing the angular position of said tilt controlling rotor (28); and
computation means (102) for computing the relative angular position of both rotors (18, 28).

10. The device according to any of claims 1 to 8, **characterized in that** said first control device (102, 106), said second control device, respectively, comprises:
a differential angle sensor (126) sensing the angular position of both rotors (18, 28).

11. The device according to any of claims 1 to 8, **characterized in that** said first control device (102, 106) said second control device (102, 104), respectively, comprises:
a differential measurement mechanism (130), with a first entry shaft (132), a second entry shaft and an output shaft (136), said first entry shaft (132) being driven into rotation by said suspension rotor (18), said second entry shaft (134) being driven into rotation by said tilt controlling rotor (28), and said differential measurement mechanism (130) being dimensioned so that said output shaft (136) is rotationally fixed when both rotors (18, 28) have the same speed of rotation; and
an angle sensor (148) sensing the angular position of said output shaft (136).

12. A device for distributing bulk materials comprising:
a support frame (12);
a distribution chute for the bulks materials;
a suspension rotor (18) mounted in said support frame (12) so that it may rotate around a substantially vertical axis of rotation, said chute (32) being suspended to said suspension rotor (18) so that it may tilt around a substantially horizontal tilt axis;
a first motor (60) able to drive the suspension rotor (18) into rotation around its axis in a first direction;
a tilt controlling rotor (28) mounted in said support frame (12) so that it may rotate around a substantially vertical axis of rotation; and
a tilting mechanism (36, 36') connected between the chute (32) and said tilt controlling rotor (28), this tilting mechanism (36, 36') being designed in order to transform a differential rotation of the suspension rotor (18) and of the tilt controlling rotor (28) into a variation of the angle of inclination of the chute (32) between two limiting positions;
**characterized in that**
a first braking device (80) is associated with said tilt controlling rotor (28) so that it may exert a braking moment on said tilt controlling rotor (28);
a second motor (80) is associated with the tilt controlling rotor (28) so that it may drive the latter around its axis in said first direction at a higher speed of rotation than the desired speed of rotation for the chute (32);
a second braking device (60) is associated with said suspension rotor (18), so that it may exert a braking moment on said suspension rotor; and
a control device (102, 104, 106) able to control the tilting of the chute (32) in a first direction by driving said suspension rotor (18) in said first direction and by controlled braking of said tilt controlling rotor (28) by means of said first braking device (80), and in a second direction, by driving said tilt controlling rotor (28) in said first direction at a higher speed of rotation than the desired speed of rotation for the chute (32) and by controlled braking of said suspension rotor (18) by means of said second braking device (60).

13. The device according to claim 12, **characterized in that** said tilting mechanism (36, 36') is a self-blocking mechanism.

14. The device according to claim 12, **characterized by** a transmission mechanism (52, 56, 72, 76) with a clutch (90) which is connected between said suspension rotor (18) and said tilt controlling rotor (28), so that in the engaged position of said clutch (90), this mechanism makes both rotors (18, 28) interdependent in rotation by providing equal speeds of rotation for both rotors (18, 28).

15. The device according to any of claims 12 to 14, **characterized in that**:
said first motor (60) is able to drive the suspension rotor (18) in a second direction of rotation opposite to said first direction of rotation, at the desired speed of rotation for the chute (32); and
said second motor (80) is able to drive the tilt controlling rotor (28) in a second direction of rotation, at a higher speed of rotation than the desired speed of rotation for the chute (32).

16. The device according to claim 13, **characterized in that**, upon a rotation of the chute (32) in said second direction, said control device associated with said first braking device (80), with said second braking device (60) and with said second motor (80), is able to control the tilting of the chute (32):
in a first direction, by driving said tilt controlling rotor (28) by means of said second motor (80) in said second direction, with a higher speed of rotation than the desired speed of rotation for the chute (32) and by controlled braking of said suspension rotor (18) by means of said second braking device (60); and
in a second direction, by driving said suspension rotor (18) in said second direction and a controlled braking of said tilt controlling rotor (28) by means of said first braking device (80).

17. The device according to any of claims 12 to 16, **characterized in that**:
a variable speed drive (106) is associated with said second motor (80); and
said control device is able to control said variable speed drive (106) in order to control the speed of rotation of said suspension rotor (18), by varying the speed of rotation of said tilt controlling rotor (28).

18. The device according to any of claims 12 to 16, **characterized in that**:
a variable speed drive (106) is associated with said second motor (80); and
said control device is able to control said variable speed drive (106) in order to control the tilting speed of said chute (32) by varying the speed of rotation of said tilt controlling rotor (28).

19. The device according to any of claims 12 to 18, **characterized in that**, said first motor (60) and said second braking device (60), said second motor (80) and said first braking device (80) respectively, form a unit comprising a rotating electric machine powered by an electrical circuit so that it may operate in motor mode, developing a driving torque, and in generator mode developing a braking torque, in at least one direction of rotation.

20. The device according to claim 19, **characterized in that**, the rotating electric machine is an electric motor (60, 80) equipped with a speed reducer (58, 78), and
**in that** said electrical circuit is a static frequency converter (104, 106) allowing operation of said rotating electric machine in the four quadrants of the speed of rotation/developed torque diagram.

21. The device according to any of claims 12 to 20, **characterized in that** said control device comprises:
a first angle sensor (108) sensing the angular position of said suspension rotor (18);
a second angle sensor (110) sensing the angular position of said tilt controlling rotor (28); and
computation means (102) for computing the relative angular position of both rotors (18, 28).

22. The device according to any of claims 12 to 21, **characterized in that** said control device comprises:
a differential angle sensor (126) sensing the relative angular position of both rotors (18, 28).

23. The device according to any of claims 12 to 21, **characterized in that** said control device comprises:
a differential measurement mechanism (130) with a first entry shaft (132), a second entry shaft (134) and an output shaft (136), said first entry shaft (132) being driven into rotation by said suspension rotor (18), said second entry shaft (134) being driven into rotation by said tilt controlling rotor (28), and said differential measurement mechanism (130) being dimensioned so that said output shaft (136) is rotationally fixed when both rotors (18, 28) have the same speed of rotation; and
an angle sensor (148) sensing the angular position of said output shaft (136).

24. The device according to any of claims 12 to 21, **characterized in that** said control device comprises:
an inclination sensor for the chute (32) rotating with the chute (32), a transmitter associated with said inclination sensor and at least one receiver mounted fixedly in rotation in said support frame (12).
